Europäisches Patentamt

European Patent Office

Office européen des brevets

(11) Veröffentlichungsnummer : **0 123 975**
**B1**

(12) **EUROPÄISCHE PATENTSCHRIFT**

(45) Veröffentlichungstag der Patentschrift :
18.06.86

(51) Int. Cl.⁴ : **B 05 B 15/00, A 23 G 3/26**

(21) Anmeldenummer : **84104012.4**

(22) Anmeldetag : **10.04.84**

(54) **Beschichtungsvorrichtung und dieser zugeordnete Reinigungsvorrichtung.**

(30) Priorität : **27.04.83 DE 3315223**

(43) Veröffentlichungstag der Anmeldung :
**07.11.84 Patentblatt 84/45**

(45) Bekanntmachung des Hinweises auf die Patenterteilung : **18.06.86 Patentblatt 86/25**

(84) Benannte Vertragsstaaten :
**DE FR GB IT**

(56) Entgegenhaltungen :
**GB-A- 2 095 586**

(73) Patentinhaber : **DRIAM Metallprodukt GmbH & Co. KG
Aspenweg 19
D-7991 Eriskirch (DE)**

(72) Erfinder : **Dunajtschik, Rudolf
Flurstrasse 20c
D-8990 Lindau-Bodolz (DE)**

(74) Vertreter : **Braito, Herbert, Dipl.-Ing.
Postfach 1140 Martin-Luther-Strasse 1
D-7950 Biberach/Riss 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt. wenn die Einspruchsgebühr entrichtet worden ist (Art. 99(1) Europäisches Patentübereinkommen).

## Beschreibung

Die Erfindung betrifft eine Beschichtungsvorrichtung mit in einem Beschichtungsraum angeordneten Sprühorganen für Beschichtungsmaterial und mit einer diesen Sprühorganen zugeordneten Reinigungsvorrichtung, wobei wenigstens einige Sprühorgane innerhalb des Beschichtungsraumes zwischen einer Sprühstellung und einer Reinigungsstellung bewegbar angebracht sind, mit Abschirmmitteln zum Abschirmen der Sprühorgane gegenüber dem äußeren Beschichtungsraum und mit Auffangmitteln zum Auffangen und Ableitmitteln zum Ableiten eines in der Reinigungsstellung versprühten Reinigungsmittels.

Bei Beschichtungsvorrichtungen besteht die Gefahr, daß im Anschluß an einen Beschichtungsvorgang das Beschichtungsmaterial in der Leitung oder den Zuführwegen aushärtet. Aus diesem Grunde ist es gebräuchliche Praxis, möglichst unverzüglich an einen Beschichtungsvorgang die Beschichtungsorgane wie Düsen und die Zuführwege zu reinigen, was das Durchleiten einer Reinigungsflüssigkeit mit anschließendem Ausblasen durch Druckluft bzw. ein Reinigungsgas notwendig macht. Da dies in der Regel bewerkstelligt werden muß, wenn sich im Beschichtungsraum noch das zuvor versprühte Material befindet, beispielsweise eine Charge zu beschichtender Dragees, mußte meist die ganze Düsenanordnung aus dem Beschichtungsraum herausbewegt werden, sofern sie sich nicht ausserhalb dieses Beschichtungsraumes befindet und daher nur in den Beschichtungsraum hineinsprüht. Dies läßt sich beispielsweise bei kurzen Beschichtungstrommeln bewerkstelligen, die vornehmlich nur einseitig gelagert sind. Probleme ergeben sich dagegen bei neueren langgestreckten Beschichtungstrommeln oder anderen großen Beschichtungsräumen, wobei eine Mehrzahl Sprühdüsen im Beschichtungsraum so verteilt angeordnet ist, daß auch auf großer Fläche ein einigermaßen gleichmäßiger Auftrag schon beim Sprühvorgang erreicht wird.

Durch die GB 2 095 586 A ist eine Beschichtungsvorrichtung für Autokarosserien bekannt, die mittels einer Fördervorrichtung zwischen zwei Reihen jeweils selbständiger Beschichtungseinheiten durchgeführt werden, die als Sprühorgan für Farb-Beschichtungsmasse einen rotierenden Teller aufweisen. Dabei ist der Träger eines jeden Sprühorgans motorbetätigt schwenkbar an einem Halter angebracht und betätigt beim Einschwenken in eine Außer-Betrieb-Stellung ein Sammelgefäß, dessen Öffnung sich so um den Schleuderteller legt, daß die restliche Beschichtungsmasse aufgefangen wird und beim anschließenden Durchspülen mit Reinigungsmittel auch das Reinigungsmittel aufgefangen und weitergeleitet werden kann. Dabei muß jedes Beschichtungsorgan mit gesonderten Anschlüssen für Flüssigkeit bzw. Beschichtungsmasse, Reinigungsmittel und gegebenenfalls Druckluft, sowie mit einem motorischen Antrieb versehen werden. Für viele Zwecke ist dieser Aufwand zu groß und die Vorrichtung zu sperrig.

Die Erfindung geht aus von der eingangs definierten Beschichtungsvorrichtung und verfolgt die Aufgabe, diese Vorrichtung derart zu gestalten, daß sie mit möglichst geringem Gesamtaufwand auf kleinstem Raum untergebracht werden kann, um beim Beschichten von Korngut, wie Dragees, eingesetzt werden zu können.

Zur Lösung dieser Aufgabe wird erfindungsgemäß der Beschichtungsraum durch eine nach Art einer Dragiertrommel drehbart gelagerte Trommel begrenzt, in welcher eine Düsenanordnung mit einer Gruppe von Sprühdüsen an einem gemeinsam bewegbar gelagerten Träger innerhalb eines aus dem Beschichtungsraum abteilbaren Abschirmraumes angebracht ist.

Hier sind alle Sprühorgane an eine gemeinsame Versorgung angeschlossen, lassen sich durch ein einziges Betätigungsorgan in Betriebs- und Reinigungsstellung bewegen und können auf kleinstem Raum, insbesondere dicht an der Trommelachse konzentriert werden, so daß eine Anwendung auch bei langgestreckten Trommeln ohne weiteres möglich ist. Daher können auch leicht unterschiedliche Beschichtungsmassen angeschlossen werden, die je nach Bedarf eingesetzt werden. Vor allem aber ermöglicht es der innerhalb der Trommel aus dem Beschichtungsraum abgeteilte Abschirmraum, die Reinigungsvorgänge, auch zum Wechsel der Beschichtungsmassen, vorzunehmen, ohne daß das Beschichtungsprogramm unterbrochen wird. Es bleibt daher genügend Zeit, die zu reinigenden Strömungswege möglichst gründlich durchzuspülen, ohne daß die übrigen Vorgänge im Beschichtungsraum behindert werden, etwa das Verteilen, Antrocknen und Austrocknen des Beschichtungsmaterials. Daher können auch Reinigungsvorgänge in verhältnismäßig kurzen Beschichtungspausen ohne wesentliche Betätigungsvorgänge ausgeführt werden.

Vorteilhafterweise umfassen die Abschirmmittel ein Hüllrohr, das die Düsenanordnung in der Reinigungsstellung allseitig umschließt und wenigstens eine verschließbare Beschichtungsöffnung für die Sprühdüsen aufweist. Auf diese Weise wird innerhalb des Beschichtungsraumes ein vom Hüllrohr praktisch vollständig umschlossener Reinigungsraum von dem das Hüllrohr umgebenden äußeren Beschichtungsraum abgetrennt. Durch diese Abtrennung wird die Möglichkeit begünstigt, Beschichtungs- und Reinigungsvorgänge völlig unabhängig auszuführen.

Die Beschichtungsöffnung bzw. öffnungen können einen insbesondere durch die Sprühdüsen gegen eine Vorbelastung — etwa durch Gewichts- oder Federkräfte — zu öffnenden Verschluß aufweisen. Man braucht dann lediglich die Düsen gegen den Verschluß zu schwenken, um sie in Sprühstellung außerhalb der Abschirmung zu bringen.

Die Abschirmmittel können dabei einen einseitig eingespannten und frei tragend in den Beschichtungraum vorragenden Ausleger bilden, an dem der Düsenträger schwenkbar gelagert ist. Dies ist von besonderem Vorteil, wenn der Beschichtungsraum nur von einer Seite her zugängig ist, wie dies meist für langgestreckte Trommeln gilt.

Der insbesondere als zylindrisches Schwenkrohr ausgebildete Düsenträger kann an einem außerhalb des Beschichtungsraumes liegenden Ende mit einem motorischen Stellantrieb versehen sein, während am anderen, insbesondere innerhalb des Beschichtungsraumes liegenden Ende des Schwenkrohres Angriffs- und/oder Kupplungsmittel zum Verdrehen des Schwenkrohres von Hand vorgesehen sind, etwa dergestalt, daß die Kupplungsmittel an einem in einer Endwand des Hüllrohres drehbar gelagerten Anschlußteil angebracht sind. Auf diese Weise lassen sich Wartungs- und Einstellvorgänge insbesondere dann erleichtern, wenn auch die Endwand des Hüllrohres abnehmbar vorgesehen ist.

Wenigstens ein Teil des Düsenträgers kann auf einem Kernstab gelagert sein, der Strömungskanäle für Sprühmittel und Temperiermittel aufweist. Dabei wird zweckmäßigerweise das Schwenkrohr unter Abkupplung von seinem motorischen Antrieb vom Kernstab abziehbar vorgesehen. Es muß also eine Kupplung mit axialem Freiheitsgrad wie eine Stirn- oder Sternzahnkupplung, eine Längskeilverbindung oder dgl., zum Einsatz kommen.

Am freien Ende des Kernstabes läßt sich wenigstens eine Umlenkkammer anbringen, die zwei Kanäle für Temperiermittel verbindet. An diesem freien Ende des insbesondere rohrförmigen Kernstabes wird zweckmäßigerweise auch eine Umlenkkammer für Sprühmittel angebracht und verbindet dann eine Zuführleitung mit einem zwischen Kernstab und Schwenkrohr gebildeten, die Sprühdüsen speisenden Ringraum. Diese Anordnung hat zur Folge, daß das Sprühmittel bei seinem Durchlauf durch den Kernstab in diesem intensiv temperiert wird und dadurch sehr exakt auf die vorgesehene Beschichtungstemperatur eingestellt werden kann.

Zweckmäßigerweise wird dabei das Schwenkrohr in zwei aneinander gekuppelte und an der Kupplungsstelle auf dem Kernstab gelagerte und gegeneinander abgedichtete Rohrsektionen unterteilt, wobei Sprühdüsen nur an der äußeren Rohrsektion angebracht sind.

Bei einer besonderen Ausführungsform der Erfindung ist das Hüllrohr am freien Ende eines Hälterohres angebracht, das in einer Nabe der Beschichtungstrommel drehbar gelagert und außerhalb dieser Nabe an einem gerätfesten Vorrichtungsteil abgestützt ist. Es wird so ohne sonderliche Zwangskräfte eine für die Halterung des Hüllrohres hinreichende Ausrichtung erzielt.

Nach einem weiteren Erfindungsvorschlag werden den in der Reinigungsstellung stehenden Sprühdüsen jeweils gegenüberliegend Spüldüsen vorgesehen, welche die Außenfläche der Sprühdüsen besprühen und abreinigen. Dabei können sich die Achsen der Sprühdüsen und Spüldüsen unter einem Winkel von insbesondere 5° bis 20° an der Mündung der Spühdüsen schneiden. Es wird dann nicht gegen die Düse gesprüht, sondern etwa schräg, um die ganze Stirnfläche abzuspülen. Es kann sich allerdings auch dieser Spülvorgang bei einer begrenzten Dreh- oder Pendelbewegung der Sprühdüsen abspielen, daß etwa auch die Außenteile der Sprühdüsen bei einer hin- und hergehenden Bewegung aus unterschiedlichen Richtungen abgespült werden.

Das Hüllrohr hat zweckmäßigerweise einen flachen Hochkantquerschnitt mit einer unteren Sammel- und Ablaufrinne und etwa lotrechten, die Beschichtungsöffnung- bzw. -öffnungen bildenden Seitenwänden. Dabei lassen sich die Spüldüsen vorzugsweise im oberen, insbesondere dachkantartigen Teil des Hüllrohres anbringen.

Die Zeichnung gibt eine derzeit bevorzugte Ausführungsform der Erfindung beispielsweise wieder. Es zeigen

Figur 1 in schematischer Darstellung eine erfindungsgemäße Beschichtungsvorrichtung mit Beschichtungstrommel und Reinigungsvorrichtung,

Figur 2 in vergrößertem Maßstab einen verkürzten Längsschnitt durch den mechanischen Teil der Reinigungsvorrichtung,

Figur 3 eine Ansicht dieser Vorrichtung in Richtung des Pfeiles III in Fig. 2,

Figur 4 einen Schnitt nach der Linie IV-IV in Fig. 2,

Figur 5 einen Teilschnitt nach der Linie V-V in Fig. 4,

Figur 6 einen vergrößerten Teilschnitt der Stelle VI in Fig. 2,

Figur 7 einen Schnitt längs der Linie VII-VII in Fig. 6 und

Figur 8 in schematischer Darstellung ein zugehöriges Schaltbild.

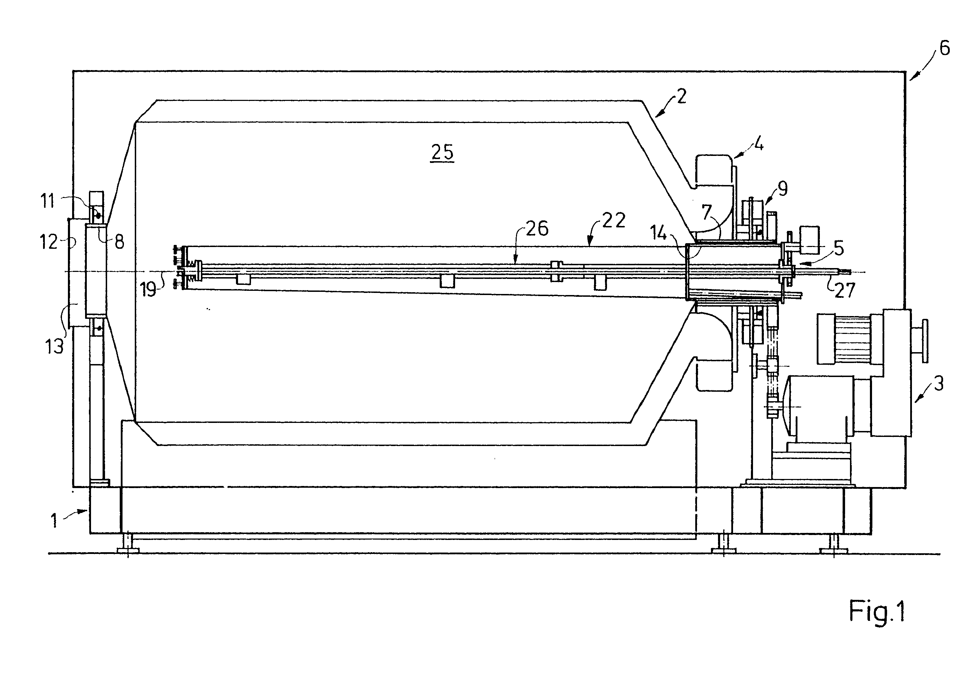

Die in Fig. 1 schematisch dargestellte Beschichtungsvorrichtung umfaßt einen Maschinenrahmen 1 zur Lagerung einer Dragiertrommel 2 mit einer Antriebsvorrichtung 3, einen Strömungsverteiler 4 zum Anschluß an ein Saug- und Druckgebläse, eine Auftrags- und Reinigungsvorrichtung 5 und ein diese Teile umschließendes Gehäuse 6.

Die langgestreckte, um die etwa waagerechte Trommelachse 19 drehbare Dragiertrommel 2 sitzt mit an ihren beiden Enden angebrachten Trommelnaben 7, 8 in einem Kardanlager 9 und einem weiteren schwenk- und längseinstellbaren Lager 11. Die während des Dragierbetriebes offengehaltene Nabe 8 ist durch eine von einem Deckel 12 verschließbare Öffnung 13 im Gehäuse 6 zugängig. Die Trommel weist eine in ihrem Mantel längsverlaufende verschließbare Öffnung zum Beschicken und Entladen auf.

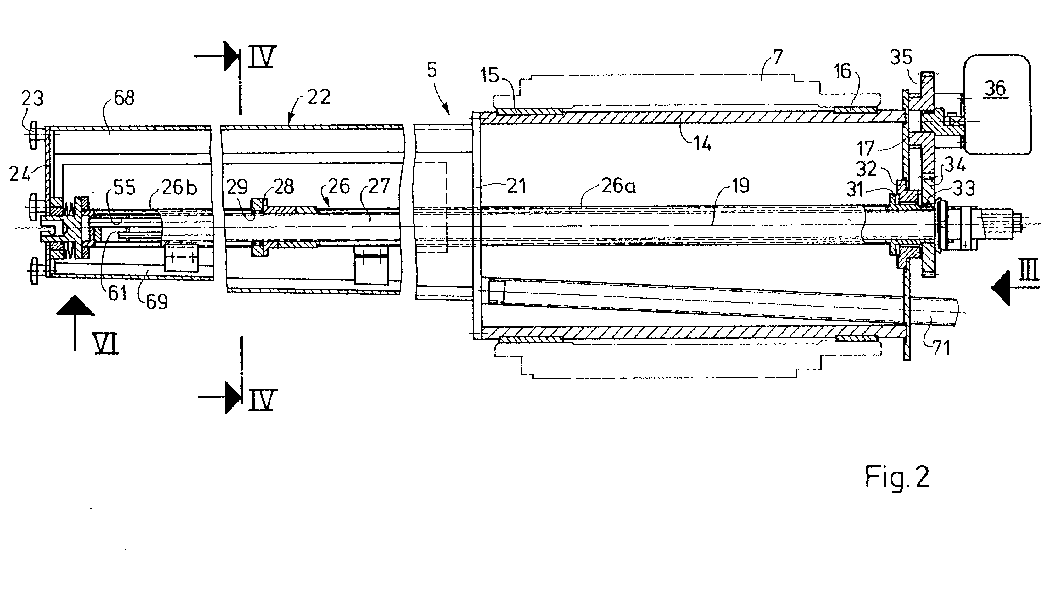

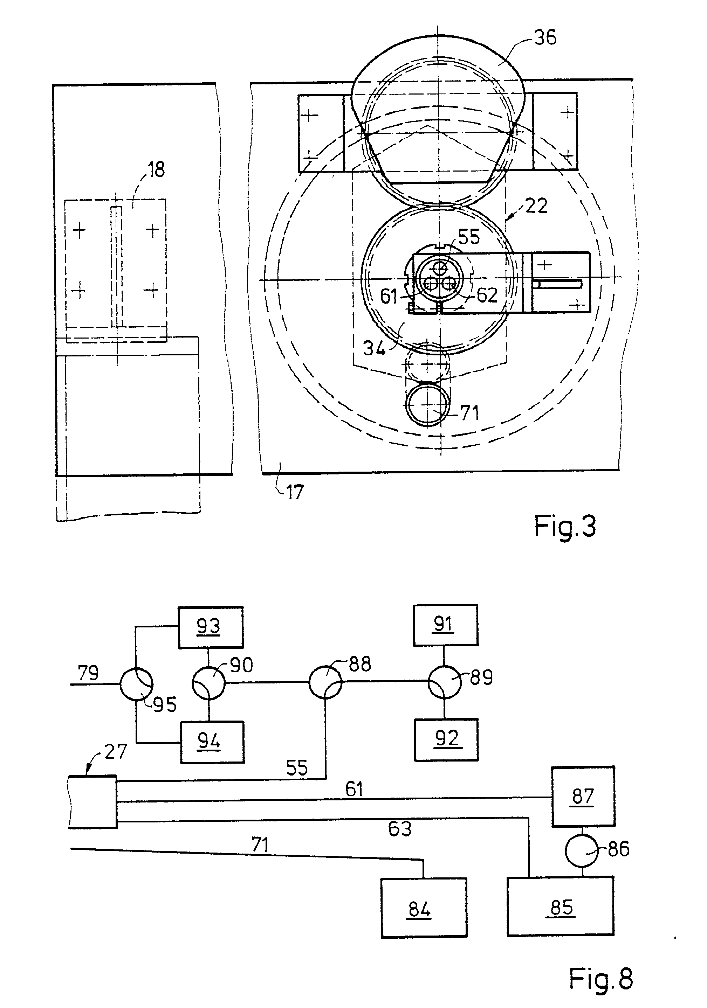

Tragender Teil der in den Fig. 2 bis 8 im einzelnen dargestellten Auftrags- und Reinigungsvorrichtung 5 ist ein Lagerrohr 14, das mittels zweier Lagerbuchsen 15, 16 drehbar in der Trommelnabe 7 gelagert und an seinem rechten Ende in Fig. 2 nach außen hin durch eine Flanschplatte 17 abgeschlossen ist, die mit wenigstens einem Ende gemäß Fig. 3 an einem ständerfesten Anschlußstück 18 befestigt und damit in Richtung der Trommelachse 19 festgelegt ist.

Mittels eines Ringflansches 21 ist am linken Ende des Lagerrohres 14 als freitragender Ausleger ein prismatisches Hüllrohr 22 angeflanscht, dessen freies Ende mittels Knebelschrauben 23 lösbar eine Endwand 24 trägt. Zwischen der Flanschplatte 17 und der Endwand 24 ist also ein allseitig abgeschlossenes Gehäuse gebildet, das die sprühaktiven Teile der Auftrags- und Reinigungsvorrichtung innerhalb des Beschichtungsraumes 25 der Dragiertrommel vollständig nach außen abschirmt.

So umschließt zentrisch zur Trommelachse 19 ein äußeres Schwenkrohr 26 einen inneren, ebenfalls rohrförmigen Kernstab 27. Zur abdichtenden Unterteilung und Lagerung des Schwenkrohres 26 auf dem Kernstab dient dabei eine Kupplung 28 mit Ringdichtung 29. Dadurch wird das Schwenkrohr 26 unterteilt in ein ringsum geschlossenes Anschlußrohr 26a und einen Düsenträger 26b.

Das Anschlußrohr 26a ist dabei fest verbunden mit einer Lagerbuchse 31, die drehbar in einer Haltebuchse 32 der Flanschplatte 17 sitzt und mittels Längskeilverbindung 33 oder eines anderen lösbaren Kupplungsmittels an ein Zahnrad 34 angeschlossen ist, das über ein weiteres Zahnrad 35 mit einem vorzugsweise als Elektromotor Ausgebildeten umkehrbaren Antriebsmotor 36 in Verbindung steht.

Das freie bzw. links in der Zeichnung liegende Ende des Düsenträgers 26b ist mit einer Flanschplatte 37 verschweißt, die durch mehrere Kupplungsstifte 38 abgedichtet mit dem Flansch 39 einer Kupplungsbuchse 41 verbunden ist, die drehbar in einer an der Endwand 24 abgestützten Lagerbuchse 42 sitzt. Durch zwischen dem Flansch 39 der Kupplungsbuchse 41 wirkende Tellerfedern 43 wird das Schwenkrohr 26 nach rechts in der Zeichnung gedrückt und damit in Eingriff mit der Keilverbindung 33 gehalten.

Durch eine Senkbohrung 44 ist das etwa durch eine Öffnung der Endwand 24 nach außen ragende freie Ende der Kupplungsbuchse 41 ausgehöhlt, und in der Wandung ist ein Winkelschlitz 45 für einen Querstift 46 eingeformt. Dieser sitzt an dem in die Senkbohrung 44 passenden Steckzapfen 47 eines Hebelschlüssels 48. Es ist daher möglich, mit diesem Hebelschlüssel das Schwenkrohr 26 von Hand nach Belieben einzustellen.

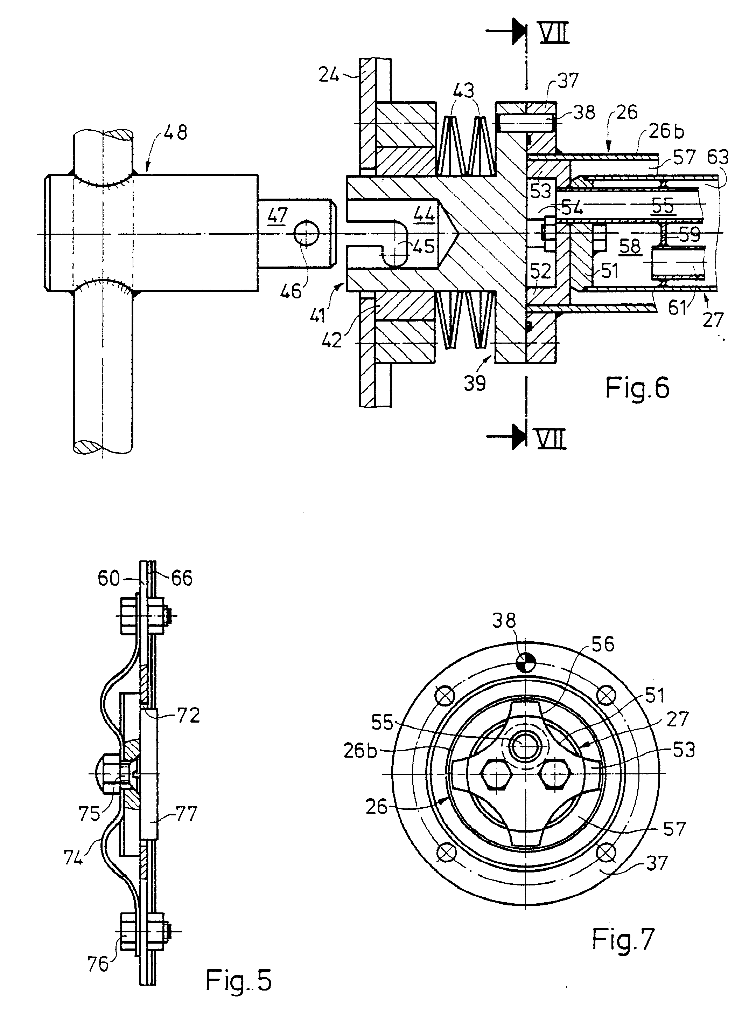

Der rohrförmige Kernstab 27 ist gemäß Fig. 6 durch eine Endscheibe 51 mit zentrisch angeschraubter Flanschscheibe 52 abgeschlossen. Diese Flanschscheibe bildet zwischen ihrem Außenflansch 53 zum Flansch 39 der Kupplungsbuchse 41 hin eine Umlenkkammer 54 die durch eine innerhalb des Kernstabes eingeschweißte rohrförmige Masseleitung 55 mit Beschichtungsmasse beschickt wird und diese durch Randausnehmungen 56 (Fig. 7) in den zwischen Kernstab 27 und Düsenträger 26b gebildeten Ringraum 57 umlenkt.

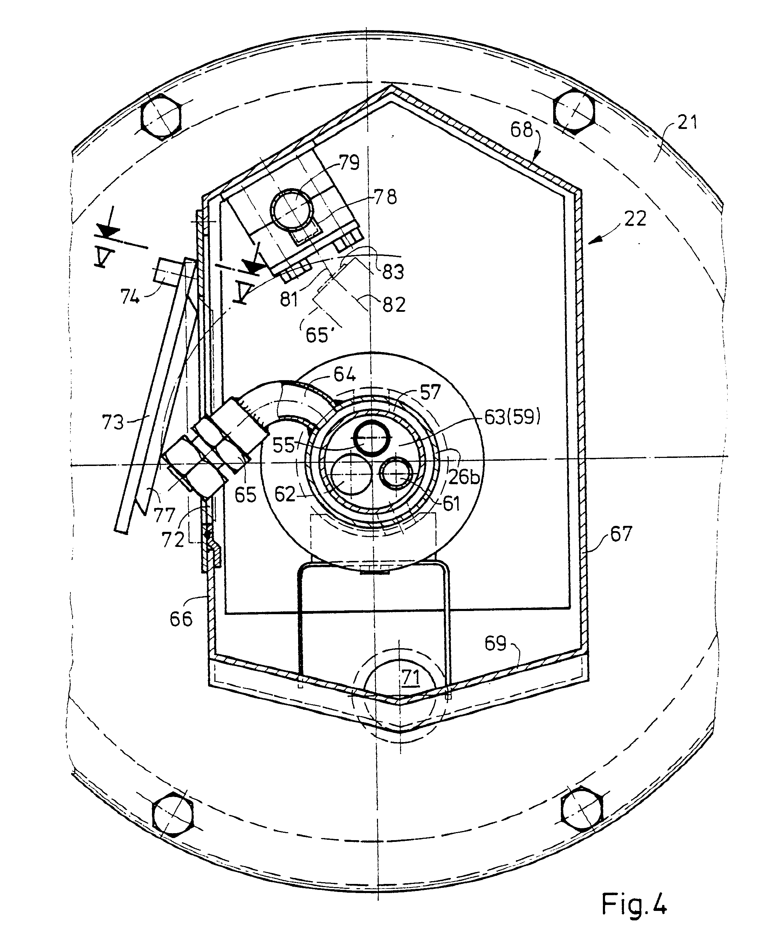

Eine weitere Umlenkkammer 58 für Temperierflüssigkeit wird gebildet zwischen der Endscheibe 51 und einer Querwand 59. In dieser Umlenkkammer mündet eine längs der Trommelachse in den Kernstab eingeschweißte rohrförmige Vorlauf-Temperierleitung 61. Da zudem in allen Querschotten 59 entsprechend der Darstellung in Fig. 4 kreisförmige Durchbrechungen 62 angebracht sind, bildet der Innenraum des Kernstabes 27 auf dem ganzen Restquerschnitt eine Rücklauf-Temperierleitung 63. Auf diese Weise ist sichergestellt, daß der ganze Kernstab einschließlich der Masseleitung 55 ebenso wie der Ringraum 57 sehr exakt auf eine gewünschte Massetemperatur eintemperiert werden kann. Diese Massetemperatur bleibt auch während des Beschichtungsvorganges auf dem kurzen Weg vom Ringraum 57 durch jeden außen in einer Öffnung des Düsenträgers 26b eingeschraubten Krümmer 64 und die anschließende Sprühdüse 65 erhalten (Fig. 4). Es sind beispielsweise sieben solcher Sprühdüsen mit gleichmäßigen axialen Zwischenabständen am Düsenträger 26b vorgesehen. Die ganze Düsenanordnung kann nach Abnehmen der Endwand 24 durch Abziehen des Schwenkrohres 26 vom Kernstab 27 von Träger und Antrieb gelöst und außerhalb des Beschichtungsraumes gewartet werden.

Das Hüllrohr 22 hat parallele lotrechte Seitenwände 66, 67, die oben durch ein Firstdach 68 und unten durch eine im Querschnitt winkelförmige Bodenrinne 69 verbunden sind. Diese Bodenrinne ist, wie am besten aus den Fig. 2 und Fig. 4 zu ersehen, vom freien Ende des Hüllrohres 22 weg bis zum Ringflansch 21 geneigt und schließt dort an eine Ablaufleitung 71 an, die in Form eines Rohres wiederum in Ablaufrichtung geneigt im Lagerrohr 14 festgelegt ist.

In der Seitenwand 66 des Hüllrohres 22 ist für jede Sprühdüse 65 eine Beschichtungsöffnung 72 eingeformt, die von einer Futterplatte 60 umschlossen und mittels einer Verschlußplatte 73 verschlossen werden kann. Diese Verschlußplatte ist gemäß Fig. 5 in der Mitte einer mehrfach ausgebogenen Blattfeder 74 durch eine Schraube 75 aufgehängt, und die beiden Enden der Blattfeder sind mittels Schrauben 76 an der Futterplatte 60 angespannt. Auf der Innenseite der Verschlußplatte 73 ist noch eine Schürze 77 angebracht, die in der Schließstellung bis über den Innenrand der Beschichtungsöffnung 72 hinausragt und im übrigen voll in diese Öffnung eingreift.

Die Verschlußplatte 73 ist somit durch ihr Eigengewicht und durch die beim Auslenken in die mit vollen Linien in Fig. 4 dargestellte Öffnungsstellung in Richtung auf die Schließstellung vorgespannt, wie dies mit Strichpunktlinien eingezeichnet ist. In der Sprühstellung gemäß Fig. 4 ist somit die Verschlußplatte 73 gegen ihrer Rückstellkraft in der Öffnungsstellung gehalten, und es kann in bekannter Weise die Beschichtungsmasse in den Beschichtungsraum eingesprüht werden. Die Endstellung läßt sich nach Bedarf von Hand mittels des Hebelschlüssels 48 einstellen. Man kann auch durch einen an der Düse angebrachten Nocken oder dgl. den Öffnungsweg der Verschlußplatte 73 vorgeben.

Wenn nach Abschluß eines Beschichtungsvorganges eine Reinigung durchgeführt werden soll, so wird nach Auspressen der ganzen Beschichtungsmasse aus der Masseleitung 55, dem Ringraum 57 und den Sprühdüsen 65 der Düsenträger 26b durch Einschalten des Antriebsmotors 36 im Uhrzeigersinn gemäß Fig. 4 bis in die mit Strichpunktlinien eingezeichnete Spülstellung 65' der Düsen verschwenkt. In dieser Stellung liegt jeder Sprühdüse 65 eine Spüldüse 78 einer Spülleitung 79 gegenüber, die so am Firstdach 68 befestigt ist, daß jeweils die Achse 81 der Spüldüse die Achse 82 der Sprühdüse 65 in deren Mündungsfläche 83 schneidet.

Es wird dann zunächst auf dem Wege der Beschichtungsmasse Spülflüssigkeit den Sprühdüsen 65 zugeführt. Im Anschluß an diesen ersten Spülvorgang oder auch mit diesem zeitlich überdeckend kann Spülflüssigkeit durch die Spülleitung 79 den Spüldüsen 78 zugeführt werden. Da sich beide Achsen 81, 82 unter einem Winkel von ca. 15° schneiden, wird auch die Mündungsfläche 83 der Sprühdüsen bei gleichzeitigem Betrieb beider Düsengruppen oder beim ausschließlichen Betrieb der Spüldüsen 78 abgespült. Dieser Vorgang kann auch dadurch variiert werden, daß durch Hin- und Hersteuern des Antriebsmotors 36 und damit des Düsenträgers 26b die Sprühdüsen um ihre mit Strichpunktlinien eingezeichnete mittlere Spülstellung hin- und ergehend geschwenkt werden.

Bei diesen Spülvorgängen sind die Öffnungen 72 durch ihre Verschlußplatten 73 geschlossen, und damit ist die ganze Düsenanordnung innerhalb des Hüllrohres 22 vollständig nach außen abgeschirmt. Die versprühte Spül- und Reinigungsflüssigkeit wird somit vom Beschichtungsraum 25 ferngehalten und kann über die Bodenrinne 69 in die Ablaufleitung 71 gemäß dem Schaltbild in Fig. 8 einem Sammelbehälter 84 zugeführt werden.

Auch die aus dem Ende des Kernstabes 27 herausgeführte Rücklaufleitung 63 für Temperiermittel führt zu einem Auffangbehälter 85, aus dem heraus das Temperiermittel mittels der Pumpe 86 durch eine Temperiervorrichtung 87 mit thermostatisch gesteuertem Wärmetauscher über die Vorlaufleitung 61 durch den Kernstab hindurch bis in die Umlenkkammer 58 (Fig. 6) gefördert wird.

Die Masseleitung 55 ist durch ein estes Vierwegeventil 88 und zwei weitere Vierwegeventile 89, 90 angeschlossen, von welchen das erstere die Verbindung mit zwei wahlweise einzuschaltenden Massequellen 91, 92 für Beschichtungsmassen unterschiedlicher Beschaffenheit steuert, während das Vierwegeventil 90 den wahlweisen Anschluß an eine Quelle 93 für flüssiges Reinigungsmittel und eine Druckluftquelle 94 zum Ausblasen der Leitungen steuert. Die beiden letzten Quellen 93, 94 lassen sich wiederum durch ein parallel angeordnetes Vierwegeventil 95 mit der Spülleitung 79 verbinden.

Da bei jedem Ventil nur zwei der vier möglichen Schaltstellungen für die Verzweigungs-Steuerung ausgenutzt werden, kann eine der beiden anderen Schaltstellungen zur jeweils benötigten Absperrung herangezogen werden, sofern es aus Gründen der Betriebssicherheit nicht notwendig ist, gesonderte Absperrventile einzuschalten. Es versteht sich, daß grundsätzlich alle Schaltvorgänge über getrennte Absperrventile mit ggf. zusätzlichen Regelventilen gesteuert werden können.

Nach der eingezeichneten Schaltstellung ist die Masseleitung über die Ventile 88, 89 an die Massequelle 92 angeschlossen, die beiden anderen Ventile 90, 95 stehen in einer Abschlußstellung. Bei diesem Betriebszustand wird somit bei aufgeschwenkter Verschlußplatte 73 (Fig. 4) ein Beschichtungsvorgang durchgeführt. Zum Wechsel der Beschichtungsmasse braucht lediglich das Ventil 89 zum Anschluß an die Quelle 91 umgelegt zu werden.

Will man anschließend die Masseleitung mit Druckluft ausblasen, so wäre das Ventil 90 um 90° entgegen dem Uhrzeigersinne für die Verbindung mit der Druckluftquelle 94 zu schwenken, zum anschließenden Durchspülen der Masse-Strömungswege wäre eine weitere Schwenkung um 90° im gleichen Sinne notwendig, und auch das Spülmittel kann wieder durch Druckluft ausgetrieben werden.

Die Spülleitung 79 kann nach der Darstellung mittels des Ventils 95 unabhängig von den anderen Ventilen an die Quellen 93, 94 angeschaltet werden. Gegen Fehlschaltungen kann man sich in bekannter Weise absichern. Beispielsweise könnte es ausreichen, wenn man die Spülleitung 79 über ein Absperrventil lediglich an die Verbindungsleitung zwischen den Ventilen 90 und 88 anschließt. Auf diese Weise wäre sichergestellt, daß beim Beschichtungsvorgang nicht gespült wird und daß Sprühdüse und Spüldüse nur an die gleiche Quelle 93 oder 94 angeschaltet werden können.

Zusätzlich zu den Massequellen 91, 92 können weitere Massequellen an die gleiche Düsengruppe anschließbar sein. An die gleiche Masse-Zuführleitung lassen sich mehrere Düsengruppen anschließen, die an einem gemeisamen oder mehreren evtl. unterschiedlichen Trägern angebracht sein können. Es können aber auch weitere Düsengruppen, etwa für Poliermasse und dgl., zusätzlich vorgesehen und ggf. außerhalb einer gehäuseartigen Umhüllung angebracht werden. Da die Poliermasse ebenso wie Vorpoliermasse erst kurz vor Ende eines Dragier- oder anderen Beschichtungsvorganges augebracht wird, genügt es, wenn man die Düsengruppe nach Ausblasen der Leitung in der anschließenden Betriebspause bis zum Beginn des folgenden Beschichtungsvorganges aus dem Beschichtungsraum herausnimmt und außerhalb reinigt.

Der Beschichtungsraum muß weder durch eine drehbare Trommel, noch durch eine Trommel überhaupt gebildet sein, sondern kann durch ortsfeste Wände begrenzt sein. Alle Medien werden zweckmäßigerweise mit variabler Geschwindigkeit gefördert, und diese Vorgänge lassen sich ebenso wie die Düsenbewegung automatisch nach vorgegebenem Programm steuern.

**Patentansprüche**

1. Beschichtungsvorrichtung mit in einem Beschichtungsraum (25) angeordneten Sprühorganen (Sprühdüsen 65) für Beschichtungsmaterial und mit einer diesen Sprühorganen zugeordneten Reinigungsvorrichtung (5), wobei wenigstens einige Sprühorgane (65) innerhalb des Beschichtungsraumes (25) zwischen einer Sprühstellung und einer Reinigungsstellung (65') bewegbar angebracht sind, mit Abschirmmitteln (22) zum Abschirmen der Sprühorgane (65) gegenüber dem äußeren Beschichtungsraum (25) und mit Auffangmitteln (69) zum Auffangen und Ableitmitteln (71) zum Ableiten eines in der Reinigungsstellung (65') versprühten Reinigungsmittels, dadurch gekennzeichnet, daß der Beschichtungsraum (25) durch eine nach Art einer Dragiertrommel drehbar gelagerte Trommel (2) begrenzt ist, in welcher eine Düsenanordnung mit einer Gruppe Sprühdüsen (65) an einem gemeinsamen, bewegbar gelagerten Träger (26b) innerhalb eines aus dem Beschichtungsraum (25) abteilbaren (22) Abschirmraumes angebracht ist.

2. Vorrichtung nach Anspruch 1, gekennzeichnet durch ein den Abschirmraum bildendes Hüllrohr (22), das die Düsenanordnung in der Reinigungsstellung (65') allseitig umschließt und wenigstens eine verschließbare Beschichtungsöffnung (72) für die Sprühdüsen aufweist.

3. Vorrichtung nach Anspruch 2, dadurch gekennzeichnet, daß die Beschichtungsöffnung bzw. -öffnungen (72) einen insbesondere durch die Sprühdüsen (65) gegen eine Vorbelastung — etwa durch Gewichts- oder Federkräfte — zu öffnenden Verschluß (73, 74) aufweisen.

4. Vorrichtung nach Anspruch 3, dadurch gekennzeichnet, daß die Abschirmmittel (22) einen einseitig eingespannten und freitragend in den Beschichtungsraum vorragenden Ausleger bilden, an dem der Düsenträger (26b) schwenkbar gelagert ist.

5. Vorrichtung nach einem der Ansprüche 1 bis 4, dadurch gekennzeichnet, daß der insbesondere als zylindrisches Schwenkrohr (26) ausgebildete Düsenträger (26b) an einem außerhalb des Beschichtungsraumes (25) liegenden Ende mit einem motorischen Stellantrieb (33 bis 36) versehen ist.

6. Vorrichtung nach Anspruch 5, dadurch gekennzeichnet, daß am anderen, insbesondere innerhalb des Beschichtungsraumes (25) liegenden Ende des Schwenkrohres (26) Angriffs- und/oder Kupplungsmittel (45 bis 48) zum Verdrehen des Schwenkrohres (26) von Hand vorgesehen sind.

7. Vorrichtung nach Anspruch 6, dadurch gekennzeichnet, daß die Kupplungsmittel (44, 45) an einem in einer Endwand (24) des Hüllrohres (22) drehbar gelagerten Abschlußteil (41) angebracht sind.

8. Vorrichtung nach einem der Ansprüche 2 bis 7, dadurch gekennzeichnet, daß die Endwand (24) des biegesteifen Hüllrohres (22) lösbar angebracht ist.

9. Vorrichtung nach einem der Ansprüche 1 oder 4 bis 8, dadurch gekennzeichnet, daß wenigstens ein Teil des Düsenträgers (26b) auf einem Kernstab (27) gelagert ist, der Strömungskanäle (55, 61, 63) für Sprühmittel und Temperiermittel aufweist.

10. Vorrichtung nach Anspruch 9, dadurch gekennzeichnet, daß das Schwenkrohr (26) unter Abkopplung von seinem motorischen Antrieb (33 bis 36) vom Kernstab (27) abziehbar vorgesehen ist.

11. Vorrichtung nach Anspruch 10, dadurch gekennzeichnet, daß am freien Ende des Kernstabes (27) wenigstens eine Umlenkkammer (58) angebracht ist, die zwei Kanäle (61, 63) für Temperiermittel verbindet.

12. Vorrichtung nach Anspruch 11, dadurch gekennzeichnet, daß am freien Ende des insbesondere rohrförmigen Kernstabes (27) eine Umlenkkammer (54) für Sprühmittel angebracht ist, die eine Zuführleitung (55) mit einem zwischen Kernstab (27) und Schwenkrohr (26) gebildeten, die Sprühdüsen (65) speisenden Ringraum (57) verbindet.

13. Vorrichtung nach einem der Ansprüche 5 bis 12, dadurch gekennzeichnet, daß das Schwenkrohr (26) in zwei aneinander gekuppelte und an der Kupplungsstelle auf dem Kernstab (27) gelagerte und gegeneinander abgedichtete Rohrsektionen (26a, 26b) unterteilt ist, wobei Sprühdüsen (65) nur an der äußeren Rohrsektion (26b) angebracht sind.

14. Vorrichtung nach einem der Ansprüche 1 bis 13, dadurch gekennzeichnet, daß das Hüllrohr (22) am freien Ende eines Halterohres (14) angebracht ist, das in einer Nabe (7) der Beschichtungstrommel (2) drehbar gelagert und außerhalb dieser Nabe an einem gerätefesten Vorrichtungsteil (18) abgestützt ist.

15. Vorrichtung nach einem der Ansprüche 1 bis 14, dadurch gekennzeichnet, daß den in der Reinigungsstellung (65') stehenden Sprühdüsen (65) jeweils gegenüberliegend Spüldüsen (78) vorgesehen sind.

16. Vorrichtung nach Anspruch 15, dadurch gekennzeichnet, daß die Spüldüsen (78) an eine gesonderte Zuführleitung (79) angeschlossen und insbesondere zeitversetzt zu den Sprühdüsen (65) zu beschicken sind.

17. Vorrichtung nach Anspruch 15 oder 16, dadurch gekennzeichnet, daß die Achsen von Sprühdüsen (65) und Spüldüsen (78) sich unter einem Winkel von insbesondere 5° bis 20° an der Mündung (83) der Sprühdüsen (65) schneiden.

18. Vorrichtung nach einem der vorhergehenden Ansprüche, dadurch gekennzeichnet, daß das Hüllrohr (22) einen flachen Hochkantquerschnitt mit einer unteren Sammel- und Ablaufrinne (69) und etwa lotrechten, die Beschichtungsöffnung bzw. -öffnungen enthaltenden Seitenwänden (66, 67) aufweist.

19. Vorrichtung nach Anspruch 18, dadurch gekennzeichnet, daß die Spüldüsen (78) im oberen, insbesondere dachkantartigen Teil (68) des Hüllrohres (22) angebracht sind.

## Claims

1. Coating device having spraying members (spray nozzles 65), disposed in a coating chamber (25), for spraying coating material and having a cleaning device (5) associated with such spraying members, whereby at least some of the spraying members (65) are disposed within the coating chamber (25) so as to be displaceable between a spraying position and a cleaning position (65'), having screening means (22) for screening the spraying members (65) from the outer coating chamber (25) and having collecting means (69) for collecting a cleaning agent sprayed in the cleaning position (65') and discharging means (71) for discharging said cleaning agent, characterised in that the coating chamber (25) is defined by a drum (2) which is mounted so as to be rotatable like a coating drum and in which a nozzle arrangement having a group of spray nozzles (65) is attached to a common, displaceably mounted carrier (26b) within a screening chamber (22) separable from the coating chamber (25).

2. Device according to claim 1, characterised by an encasing tube (22) forming the screening chamber, which tube surrounds the nozzle arrangement in the cleaning position (65') totally and has at least one closable coating aperture (72) for the spray nozzles.

3. Device according to claim 2, characterised in that the coating aperture or apertures (72) have a closure member (73, 74) which is to be opened, more especially, by the spray nozzles (65) in opposition to an initial loading — by means of gravitational or resilient forces, for example.

4. Device according to claim 3, characterised in that the screening means (22) is in the form of a crossbeam which is clamped in position at one end and protrudes into the coating chamber in a cantilever manner, the nozzle carrier (26b) being pivotably mounted on said crossbeam.

5. Device according to one of claims 1 to 4, characterised in that the nozzle carrier (26b) which is, more especially, in the form of a cylindrical pivot pipe (26) is provided with a motive adjusting drive (33 to 36) at an end located externally of the coating chamber (25).

6. Device according to claim 5, characterised in that engaging and/or connecting means (45 to 48) for turning the pivot pipe (26) manually are provided at the other end of the pivot pipe (26) located, more especially, within the coating chamber (25).

7. Device according to claim 6, characterised in that the connecting means (44, 45) are attached to an end portion (41) rotatably mounted in an end wall (24) of the encasing tube (22).

8. Device according to one of claims 2 to 7, characterised in that the end wall (24) of the encasing tube (22), which is resistant to bending, is detachably mounted.

9. Device according to one of claims 1 or 4 to 8, characterised in that at least a portion of the nozzle carrier (26b) is mounted on a core rod (27) which has flow channels (55, 61, 63) for spraying agents and temperature control means.

10. Device according to claim 9, characterised in that, by disconnecting the pivot pipe (26) from its motive drive (33 to 36), said pivot pipe can be detached from the core rod (27).

11. Device according to claim 10, characterised in that at least one transfer chamber (58) is attached to the free end of the core rod (27) and connects two channels (61, 63) for temperature control means.

12. Device according to claim 11, characterised in that a transfer chamber (54) for spraying agents is attached to the free end of the core rod (27), which is more especially tubular in shape, and said chamber connects a feed pipe (55) to an annular chamber (57) which is formed between core rod (27) and pivot pipe (26) and feeds the spray nozzles (65).

13. Device according to one of claims 5 to 12, characterised in that the pivot pipe (26) is divided into two interconnected pipe sections (26a, 26b) which are mounted on the core rod (27) at the point of connection and are sealed from one another, spray nozzles (65) only being attached to the outer pipe section (26b).

14. Device according to one of claims 1 to 13, characterised in that the encasing tube (22) is attached to the free end of a retaining pipe (14) which is rotatably mounted in a hub (7) of the coating drum (2) and is supported outside this hub on a portion (18) of the device which is fixed to the apparatus.

15. Device according to one of claims 1 to 14, characterised in that rinsing nozzles (78) are provided opposite the respective spray nozzles (65) located in the cleaning position (65').

16. Device according to claim 15, characterised in that the rinsing nozzles (78) are connected to a separate feed pipe (79) and are to be charged, more especially, in a time sequence which is staggered relative to the spray nozzles (65).

17. Device according to claim 15 or 16, characterised in that the axes of spray nozzles (65) and rinsing nozzles (78) intersect one another at an angle of, more especially, 5° to 20° at the mouth portion (83) of the spray nozzles (65).

18. Device according to one of the preceding claims, characterised in that the encasing tube (22) has a flat edgewise cross-section with a lower collecting and discharging groove (69) and substantially vertical side walls (66, 67) containing the coating aperture or apertures.

19. Device according to claim 18, characterised in that the rinsing nozzles (78) are mounted in the upper portion (68) of the encasing tube (22), which portion is, more especially, gable-shaped.

## Revendications

1. Appareil d'enrobage comportant des organes de projection (buses 65) d'une matière d'enrobage, disposés dans une chambre d'enrobage (25), un dispositif de nettoyage (5) associé à ces organes de projection, au moins quelques-uns des organes de projection (65) étant montés de manière mobile à l'intérieur de la chambre d'enrobage (25) entre une position de projection et une position de nettoyage (65'), des moyens de protection (22) pour isoler les organes de projection (65) par rapport au reste de la chambre d'enrobage (25), et des moyens (69) pour recueillir et des moyens (71) pour évacuer un produit de nettoyage projeté dans ladite position de nettoyage (65'), caractérisé en ce que la chambre d'enrobage (25) est délimitée par un tambour (2) rotatif sur des paliers, du genre d'un tambour à dragées, dans lequel un dispositif de projection comportant un groupe de buses de projection (65) est monté sur un support mobile (26b) à l'intérieur d'une chambre de protection agencée pour pouvoir être isolée (22) de la chambre d'enrobage (25).

2. Appareil selon la revendication 1, caractérisé par une enveloppe tubulaire (22) qui entoure de tous côtés le dispositif de projection en position de nettoyage (65') et qui comporte au moins une ouverture d'enrobage (72) pour les buses de projection, cette ouverture étant agencée pour être obturée.

3. Appareil selon la revendication 2, caractérisé en ce que la ou les ouvertures d'enrobage (72) comportent une fermeture (73, 74) agencée pour pouvoir être ouverte par les buses de projection (65) à l'encontre d'une force de rappel — en particulier la gravité ou la force d'un ressort.

4. Appareil selon la revendication 3, caractérisé en ce que lesdits moyens de protection (22) forment un élément en console qui est fixé à une extrémité et disposé en porte-à-faux dans la chambre d'enrobage et sur lequel le support de buses (26b) est monté de manière pivotante.

5. Appareil selon l'une quelconque des revendications 1 à 4, caractérisé en ce que ledit support de buses (26b), constitué en particulier par un tube cylindrique pivotant (26), est équipé d'un mécanisme motorisé de positionnement (33 à 36) à une extrémité située hors de la chambre d'enrobage (25).

6. Appareil selon la revendication 5, caractérisé en ce que l'autre extrémité dudit tube pivotant (26), située à l'intérieur de la chambre d'enrobage (25), est pourvue de moyens d'accrochage ou d'accouplement (45 à 48) permettant de faire tourner ledit tube (26) à la main.

7. Appareil selon la revendication 6, caractérisé en ce que lesdits moyens d'accouplement (44, 45) sont disposés dans une pièce de fermeture (41) montée de manière pivotante dans une paroi d'extrémité (24) de ladite enveloppe tubulaire (22).

8. Appareil selon l'une quelconque des revendications 2 à 7, caractérisé en ce que ladite paroi d'extrémité (24) de l'enveloppe tubulaire (22) rigide en flexion est montée de manière amovible.

9. Appareil selon l'une quelconque des revendications 1 ou 4 à 8, caractérisé en ce qu'au moins une partie du support de buses (26b) est montée pivotante sur une barre centrale (27) qui comporte des conduits (55, 61, 63) pour un produit à projeter et pour un fluide caloporteur.

10. Appareil selon la revendication 9, caractérisé en ce que ledit tube pivotant (26) est prévu pour être retiré après découplage de son mécanisme motorisé (33 à 36) de la barre centrale (27).

11. Appareil selon la revendication 10, caractérisé en ce que l'extrémité libre de la barre centrale (27) renferme au moins une chambre de renvoi (58) reliant deux conduits (61, 63) pour le fluide caloporteur.

12. Appareil selon la revendication 11, caractérisé en ce que l'extrémité libre de la barre centrale (27), laquelle est tubulaire, renferme une chambre de renvoi (54) pour le produit à projeter, cette chambre reliant une conduite d'amenée (55) à un conduit annulaire (57) d'alimentation des buses (65), ménagé entre la barre centrale (27) et le tube pivotant (26).

13. Appareil selon l'une quelconque des revendications 5 à 12, caractérisé en ce que ledit tube pivotant (26) est divisé en deux tronçons accouplés (26a, 26b), étanches l'un par rapport à l'autre et montés de manière pivotante sur la barre centrale (27) à leur point d'accouplement, seul le tronçon extérieur (26b) étant équipé de buses de projection (65).

14. Appareil selon l'une quelconque des revendications 1 à 13, caractérisé en ce que ladite enveloppe tubulaire (22) est montée sur l'extrémité libre d'un tube de support (14), lequel est monté par des paliers rotatifs dans un moyeu (7) du tambour d'enrobage (2) et est maintenu par un élément fixe (18) de l'appareil à l'extérieur de ce moyeu.

15. Appareil selon l'une quelconque des revendications 1 à 14, caractérisé en ce qu'il comporte des buses de nettoyage (78) disposées respectivement en face de la position de nettoyage (65') des buses de projection (65).

16. Appareil selon la revendication 15, caractérisé en ce que les buses de nettoyage (78) sont raccordées à une conduite de distribution particulière (79) et sont alimentées avec un décalage de temps par rapport aux buses de projection (65).

17. Appareil selon la revendication 15 ou 16, caractérisé en ce que les axes des buses de projection (65) et des buses de nettoyage (78) se coupent à l'embouchure (83) des buses de projection (65) sous un angle compris entre 5° et 20°.

18. Appareil selon l'une quelconque des revendications précédentes, caractérisé en ce que ladite enveloppe tubulaire (22) comporte une section transversale aplatie à arête supérieure, avec une rigole inférieure (69) collectrice et d'évacuation, ainsi qu'avec des parois latérales sensiblement verticales (66, 67) munies de la ou des ouvertures d'enrobage.

19. Appareil selon la revendication 18, caractérisé en ce que les buses de nettoyage (78) sont disposées dans la partie supérieure en forme de toit (68) de l'enveloppe tubulaire (22).

Fig.1

Fig. 2

0 123 975

Fig.3

Fig.8

Fig.4

Fig.6

Fig.5

Fig.7